# EUROPÄISCHE PATENTSCHRIFT

(11) **EP 3 074 165 B1**
(45) Veröffentlichungstag und Bekanntmachung des Hinweises auf die Patenterteilung: **13.09.2017**
(21) Anmeldenummer: 14777288.3
(22) Anmeldetag: 25.09.2014
(51) Int. Cl.: B23D 19/04, B23D 33/08, B23D 19/06

(54) **NIEDERHALTEEINRICHTUNG FÜR EINE BESÄUMUNGSVORRICHTUNG**
HOLDING-DOWN DEVICE FOR A TRIMMING MACHINE
MOYEN DE RETENUE POUR DISPOSITIF DE DÉCOUPAGE

(30) Priorität: 27.11.2013 DE 102013224306; 06.01.2014 DE 102014200023
(43) Veröffentlichungstag der Anmeldung: 05.10.2016
(73) Patentinhaber: SMS group GmbH, 40237 Düsseldorf (DE)
(72) Erfinder: DE KOCK, Peter, 46117 Oberhausen (DE)
(74) Vertreter: Kross, Ulrich
(86) Internationale Anmeldenummer: PCT/EP2014/070435
(87) Internationale Veröffentlichungsnummer: WO 2015/078609

(56) Entgegenhaltungen:
- DE-A1- 4 108 717
- DE-A1- 19 749 427
- GB-A- 2 000 713
- JP-A- 2008 068 361
- US-A- 5 113 735

## Beschreibung

Die Erfindung betrifft eine Niederhalteeinrichtung für eine Besäumungsvorrichtung zum Besäumen von Blechen und/oder Bändern aus Metall, aufweisend wenigstens einen an einer zum Antreiben eines ersten Kreismessers vorgesehenen ersten Antriebswelle anordbaren ersten Niederhaltering und wenigstens einen an einer zum Antreiben eines mit dem ersten Kreismesser schnitterzeugend zusammenwirkenden zweiten Kreismessers vorgesehenen zweiten Antriebswelle anordbaren zweiten Niederhaltering.

Des Weiteren betrifft die Erfindung eine Besäumungsvorrichtung zum Besäumen von Blechen und/oder Bändern aus Metall, aufweisend wenigstens eine aus zwei schnitterzeugend zusammenwirkenden Kreismessern gebildete Besäumungsschere und wenigstens zwei Antriebswellen, wobei an jeder Antriebswelle ein Kreismesser angeordnet ist.

Zudem betrifft die Erfindung eine Besäumungsanlage mit wenigstens einer Besäumungsvorrichtung zum Besäumen von Blechen und/oder Bändern aus Metall.

Ferner betrifft die Erfindung ein Verfahren zum Niederhalten von Blechen und/oder Bändern aus Metall während deren Besäumung mittels einer Besäumungsvorrichtung, die wenigstens zwei ein zu besäumendes Blech bzw. Band zwischen sich einspannende, an Antriebswellen für Kreismesser der Besäumungsvorrichtung angeordnete Niederhalteringe aufweist.

Zum Besäumen von Blechen und Bändern aus Metall, insbesondere Warmbändern und Kaltbändern, werden Besäumungsscheren eingesetzt, welche jeweils zwei schnitterzeugend zusammenwirkende Kreismesser aufweisen. Um ein optimales Besäumungsergebnis zu erhalten, sind die zu besäumenden Ränder der Bleche und Bänder während eines Besäumungsvorgangs einzuspannen. Hierzu werden üblicherweise Niederhalteringe eingesetzt, welche an Antriebswellen der Kreismesser benachbart zu den Kreismessern angeordnet sind.

Sollen Bleche bzw. Bänder mit unterschiedlichen Dicken mit ein und derselben Besäumungsanlage besäumt werden, ist es herkömmlich bekannt, starre Niederhalteringe mit unterschiedlichen Außendurchmessern zu bevorraten und in Abhängigkeit der jeweiligen Dicke gegeneinander auszuwechseln. Hiermit ist jedoch ein manueller Aufwand und zudem ein nachteiliger Produktionsstillstand verbunden.

Auf der anderen Seite sind beispielsweise aus den Veröffentlichungen JP 2000 254 814 A, JP 2003 251 518 A, JP 05 293 713 A, EP 0 988 913 A2 und DE 877 688 B Ausgestaltungen von Niederhalteringen bekannt, bei denen ein Teil der Niederhalteringe elastisch ausgebildet ist, um eine Stauchung der Niederhalteringe zu ermöglichen. Hierdurch können Dickeschwankungen von zu besäumenden Blechen und Bändern zwar passiv geringfügig aufgefangen werden, jedoch variieren die mit solchen Niederhalteringen aufbringbaren Niederhaltekräfte stark, so dass ein optimales Besäumungsergebnis mit solchen Niederhalteringen nicht zuverlässig gewährleistet werden kann.

Mit den Veröffentlichungen JP 10 118 830 A und EP 0 289 799 A1 wird eine Verstellung des Abstandes von Niederhalteringen zueinander mittels technisch aufwändiger mechanischer Verstelleinrichtungen mit ansteuerbaren Aktoren vorgeschlagen, um Dickeschwankungen von zu besäumenden Blechen und Bändern kompensieren zu können.

Die Veröffentlichung JP 2008 068 361 A schlägt ferner einen Niederhaltering vor, welcher einen flexiblen Zwischenring aufweist, in dem eine mit einem Fluid befüllte Druckkammer ausgebildet ist, welche mit wenigstens einem Druckreservoir verbunden ist. Hierdurch soll im Gegensatz zur oben beschriebenen Verwendung von Niederhalterringen mit elastischen Teilen ein gleichmäßigerer Niederhaltedruck passiv erzeugbar sein.

Die US-Patentanmeldung US 5 113 735 A betrifft eine Vorrichtung zum Schlitzen von blattförmigem Material, insbesondere Blech. Sie besitzt zwei kreisförmige parallel angeordnete Messer, deren Abstand variabel hydraulisch einstellbar ist. Zu diesem Zweck besitzt die Vorrichtung eine Welle, auf welcher eine Nabe hydraulisch verschiebbar gelagert ist. Eines der kreisförmigen Messer ist auf der Nabe fixiert. An ihrer der Welle zugewandten Innenseite weist die Nabe eine Ringnut auf, welche mit einem Druckmedium beaufschlagt werden kann. Bei Beaufschlagung mit dem Druckmedium expandiert die Nabe minimal in radialer Richtung, so dass sie auf der Welle axial verschoben werden kann. Sobald der Druck in dem Druckmedium abgebaut wird, reduziert sich der Durchmesser der Nabe wieder und die Nabe wird auf der Welle durch Schrumpfung fixiert. Die Anmeldung offenbart keinen Fluidkanal an der Antriebswelle.

Die deutsche Patentanmeldung DE 4108717 offenbart Scheren zum Besäumen von Metallbändern. Diese Scheren sind mit zwei zusammenwirkenden Kreismessern und mit zwei Niederhalteringen versehen. Die Scheren sind dafür ausgebildet, auf unterschiedlich breite und unterschiedlich dicke Bänder durch radiale und axiale Versetzung der zusammenwirkenden Messer eingestellt werden zu können. Die Druckschrift offenbart auch, dass wenigstens einer der Niederhalteringe einen radial äußeren, benachbart zu dem jeweiligen Kreismesser anordbaren, zumindest teilweise aus Kunststoff gebildeten Ringkörper aufweist.

Aufgabe der Erfindung ist es, eine optimale Besäumung von Blechen und/oder Bändern unterschiedlicher Dicke mittels einer einzigen Besäumungsanlage zu ermöglichen, ohne dass ein Auswechseln von Niederhalteringen erforderlich ist und ohne dass es zu einem dadurch bedingten Produktionsstillstand einer Besäumungsanlage kommt.

Diese Aufgabe wird durch eine Niederhalteeinrichtung mit den Merkmalen gemäß Anspruch 1, eine Besäumungsvorrichtung mit den Merkmalen gemäß Anspruch 8, eine Besäumungsanlage mit den Merkmalen gemäß Anspruch 9 sowie ein Verfahren mit den Merkmalen gemäß Anspruch 12 gelöst. Vorteilhafte Ausgestaltungen sind in den Unteransprüchen wiedergegeben, welche jeweils für sich genommen oder in verschiedener Kombination miteinander einen Aspekt der Erfindung darstellen können.

Mit Patentanspruch 1 wird eine Niederhalteeinrichtung für eine Besäumungsvorrichtung zum Besäumen von Blechen und/oder Bändern aus Metall vorgeschlagen, aufweisend wenigstens einen an einer zum Antreiben eines ersten Kreismessers vorgesehenen ersten Antriebswelle anordbaren ersten Niederhaltering und wenigstens einen an einer zum Antreiben eines mit dem ersten Kreismesser schnitterzeugend zusammenwirkenden zweiten Kreismessers vorgesehenen zweiten Antriebswelle anordbaren zweiten Niederhaltering, dadurch gekennzeichnet, dass wenigstens ein Niederhaltering einen radial äußeren, benachbart zu dem jeweiligen Kreismesser anordbaren, zumindest teilweise aus Kunststoff gebildeten

Ringkörper aufweist, in dem eine ringförmig ausgebildete Fluidkammer mit zumindest teilweise flexibel ausgebildeter Wandung angeordnet ist, wobei wenigstens ein an der jeweiligen Antriebswelle und dem Niederhaltering ausgebildeter Fluidkanal vorhanden ist, über den die Fluidkammer fluidleitend mit einer Druckerzeugungseinrichtung verbindbar ist.

Durch eine Druckbeaufschlagung der Fluidkammer kann der radial äußere Ringkörper, beispielsweise im Millimeterbereich, elastisch verformt werden. Erfindungsgemäß ist somit der Außendurchmesser von wenigstens einem Niederhaltering der Niederhalteeinrichtung über eine Druckbeaufschlagung mit einem Druckfluid aktiv kontinuierlich variierbar und folglich optimal an die jeweilige Dicke eines zu besäumenden Blechs bzw. Bands anpassbar. Es ist kein herkömmliches Auswechseln von Niederhalteringen erforderlich, wodurch ein dadurch bedingter Produktionsstillstand einer entsprechend ausgestatteten Besäumungsanlage vermieden wird. Zudem können durch die erfindungsgemäße Ausgestaltung des wenigstens einen Niederhalterings, im Gegensatz zu der herkömmlichen Verwendung von Niederhalteringen mit einem elastischen Element, weitestgehend unabhängig von der jeweiligen Dicke eines zu besäumenden Blechs bzw. Bands die darauf einwirkenden Niederhaltekräfte aktiv optimal und individuell eingestellt werden.

Im Rahmen der Erfindung kann die Niederhalteeinrichtung auch jeweils zwei oder mehrere an einer einzigen Antriebswelle anordbare Niederhalterringe aufweisen. Zudem können auch zwei oder mehrere Niederhalteringe der Niederhalteeinrichtung gemäß der Erfindung ausgebildet sein. Auch kann ein Niederhaltering zwei oder mehrere radial äußere zumindest teilweise aus Kunststoff gebildete Ringkörper aufweisen. Ein solcher Ringkörper kann vollständig aus einem Kunststoff ausgebildet sein. Auch ist eine Ausbildung des Ringkörpers aus einem faserverstärkten Kunststoff möglich.

Die in dem Ringkörper angeordnete ringförmig ausgebildete Fluidkammer kann beispielsweise als ringförmiger Schlauch ausgebildet sein, an dem wenigstens eine Öffnung zur fluidleitenden Verbindung mit dem wenigstens einen Fluidkanal vorhanden ist.

Es können auch zwei oder mehrere Fluidkanäle an der jeweiligen Antriebswelle und dem Niederhaltering ausgebildet sein, über welche die Fluidkammer fluidleitend mit der Druckerzeugungseinrichtung verbindbar ist. An dem Fluidkanal kann ein ansteuerbares Ablassventil zum Ablassen von Druckluft aus der Fluidkammer angeordnet sein.

Gemäß einer vorteilhaften Ausgestaltung ist der Ringkörper im Querschnitt U-förmig ausgebildet und weist zwei über eine Basis miteinander verbundene, beabstandet und konzentrisch zueinander angeordnete Schenkel auf, wobei die Schenkel bei an der jeweiligen Antriebswelle angeordnetem Niederhalterring in Richtung des jeweiligen Kreismessers weisen, und wobei in dem radial inneren Schenkel ein radialer Abschnitt des Fluidkanals angeordnet ist. Bei Druckbeaufschlagung der Fluidkammer kommt es dadurch zu einer Spreizung der Schenkel, welche im Bereich der freien Enden der Schenkel am größten ist. Hierdurch lässt sich der Außendurchmesser des wenigstens einen Niederhalterings insbesondere optimal angrenzend an die jeweilige Schnittebene variieren.

Nach einer weiteren vorteilhaften Ausgestaltung ist der an der jeweiligen Antriebswelle ausgebildete Abschnitt der Fluidleitung durch wenigstens eine in der Antriebswelle ausgebildete axiale Bohrung und wenigstens eine in der Antriebswelle ausgebildete, die axiale Bohrung im Bereich eines Sitzes für den Niederhaltering mit einer ringförmig an der Außenseite der Antriebswelle ausgebildeten Vertiefung fluidleitend verbindende radiale Bohrung ausgebildet, wobei das nicht mit der radialen Bohrung verbundene Ende der axialen Bohrung fluidleitend mit einer an der jeweiligen Antriebswelle angeordneten Drehzuführung verbunden ist, die einen Abschnitt des Fluidkanals ausbildet und an welche die Druckerzeugungseinrichtung anschließbar ist. Hierdurch ist eine Fluidleitung auf einfache Art und Weise möglich, ohne dass zusätzliche und komplex ausgebildete Bauteile zur Ausbildung des Fluidkanals vorhanden sein müssen.

Eine weitere vorteilhafte Ausgestaltung sieht vor, dass der den radial äußeren Ringkörper aufweisende Niederhaltering wenigstens einen radial inneren Ringkörper aufweist, in dem ein radialer Abschnitt des Fluidkanals angeordnet ist. Dieser radial innere Ringkörper kann drehfest mit der jeweiligen Antriebswelle und dem äußeren Ringkörper verbunden werden. Die radialen Dicken des radial inneren Ringkörpers und des radial äußeren Ringkörpers kann optimal an den jeweiligen Anwendungsfall angepasst und aufeinander abgestimmt werden. Der Abschnitt des Fluidkanals in dem radial inneren Ringkörper kann durch eine Bohrung in dem radial inneren Ringkörper ausgebildet sein.

Vorteilhafterweise ist der radial innere Ringkörper zumindest teilweise aus Metall, vorzugsweise Stahl, gebildet. Der radial innere Ringkörper kann jedoch auch aus einem anderen geeigneten Material, beispielsweise aus einem Verbundwerkstoff, gebildet sein.

Bevorzugt ist der radial innere Ringkörper über wenigstens zwei ringförmig ausgebildete Dichtungen fluiddicht gegenüber der jeweiligen Antriebswelle abgedichtet. Hierdurch wird der Fluidkanal gegenüber der Umgebung fluiddicht abgedichtet.

Ferner ist es von Vorteil, wenn der radial äußere Ringkörper zumindest teilweise aus einem Polyurethan gebildet ist. Dieser Werkstoff weist optimale Eigenschaften, insbesondere Stabilitätseigenschaften, Abriebeigenschaften und elastische Verformungseigenschaften, auf.

Mit Patentanspruch 8 wird eine Besäumungsvorrichtung zum Besäumen von Blechen und/oder Bändern aus Metall vorgeschlagen, aufweisend wenigstens eine aus zwei schnitterzeugend zusammenwirkenden Kreismessern gebildete Besäumungsschere und wenigstens zwei Antriebswellen, wobei an jeder Antriebswelle ein Kreismesser angeordnet ist, gekennzeichnet durch wenigstens eine Niederhalteeinrichtung gemäß einer der vorgenannten Ausgestaltungen oder einer beliebigen Kombination derselben. Mit dieser Besäumungsvorrichtung sind die oben mit Bezug auf die Niederhalteeinrichtung genannten Vorteile entsprechend verbunden.

Mit Patentanspruch 9 wird eine Besäumungsanlage mit wenigstens einer vorgenannten Besäumungsvorrichtung zum Besäumen von Blechen und/oder Bändern aus Metall vorgeschlagen. Mit dieser Besäumungsanlage sind die oben mit Bezug auf die Niederhalteeinrichtung genannten Vorteile entsprechend verbunden.

Gemäß einer vorteilhaften Ausgestaltung weist die Besäumungsanlage wenigstens eine Druckerzeugungseinrichtung auf, welche fluidleitend mit dem Fluidkanal verbunden ist. Die Druckerzeugungseinrichtung kann eine ansteuerbare Druckpumpe und/oder ein ansteuerbares Druckfluidreservoir aufweisen, wobei ein Druckluftreservoir über wenigstens ein ansteuerbares Ventil mit dem Fluidkanal verbunden werden kann.

Nach einer weiteren vorteilhaften Ausgestaltung ist die Druckerzeugungseinrichtung zum Erzeugen von Druckluft eingerichtet. Alternativ kann die Druckerzeugungseinrichtung zum Erzeugen eines flüssigen unter Druck stehenden Fluids, wie beispielsweise eines Öls oder dergleichen, oder zum Erzeugen eines Druckgases mit optimaler Zusammensetzung eingerichtet sein.

Mit Patentanspruch 12 wird ferner ein Verfahren zum Niederhalten von Blechen und/oder Bändern aus Metall während deren Besäumung mittels einer Besäumungsvorrichtung vorgeschlagen, die wenigstens zwei ein zu besäumendes Blech bzw. Band zwischen sich einspannende, an Antriebswellen für Kreismesser der Besäumungsvorrichtung angeordnete Niederhalteringe aufweist, dadurch gekennzeichnet, dass die radiale Dicke von wenigstens einem Niederhaltering in Abhängigkeit der jeweiligen Blechdicke bzw. Banddicke aktiv variiert wird.

Mit diesem Verfahren sind die oben mit Bezug auf die Niederhalteeinrichtung bzw. die Besäumungsanlage genannten Vorteile entsprechend verbunden, was insbesondere durch die aktive und individuelle Variation der radialen Dicke des Niederhalterings begründet ist.

Im Folgenden wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in verschiedener Kombination miteinander einen Aspekt der Erfindung darstellen können. Es zeigen
- Figur 1:: eine schematische Darstellung eines Details eines Querschnitts durch ein Ausführungsbeispiel für eine erfindungsgemäße Niederhalteeinrichtung, und
- Figur 2:: eine schematische Darstellung eines Längsschnitts durch ein Ausführungsbeispiel für eine erfindungsgemäße Besäumungsvorrichtung.

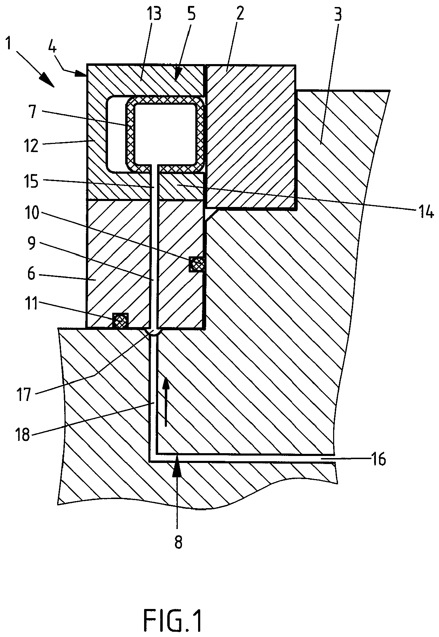

Figur 1 zeigt eine schematische Darstellung eines Details eines Querschnitts durch ein Ausführungsbeispiel für eine erfindungsgemäße Niederhalteeinrichtung 1 für eine nicht gezeigte Besäumungsvorrichtung zum Besäumen von Blechen und/oder Bändern aus Metall. Die Niederhalteeinrichtung 1 umfasst einen an einer zum Antreiben eines ersten Kreismessers 2 vorgesehenen ersten Antriebswelle 3 angeordneten ersten Niederhaltering 4 und einen nicht gezeigten an einer zum Antreiben eines mit dem ersten Kreismesser 2 schnitterzeugend zusammenwirkenden, nicht gezeigten zweiten Kreismessers vorgesehenen, nicht gezeigten zweiten Antriebswelle anordbaren zweiten Niederhaltering. Der zweite Niederhaltering kann herkömmlich oder wie der erste Niederhaltering 4 ausgebildet sein.

Der erste Niederhaltering 4 weist einen radial äußeren, benachbart zu dem ersten Kreismesser 2 angeordneten, aus einem Polyurethan gebildeten Ringkörper 5 und einen radial inneren Ringkörper 6 aus Stahl auf. In dem radial äußeren Ringkörper 5 ist eine ringförmig ausgebildete Fluidkammer 7 mit zumindest teilweise flexibel ausgebildeter Wandung angeordnet. Es ist ein an der ersten Antriebswelle 3 und dem Niederhaltering 4 ausgebildeter Fluidkanal 8 vorhanden, über den die Fluidkammer 7 fluidleitend mit einer nicht gezeigten Druckerzeugungseinrichtung verbindbar ist. In dem radial inneren Ringkörper 6 ist ein radialer Abschnitt 9 des Fluidkanals 8 angeordnet. Der radial innere Ringkörper 6 ist über zwei ringförmig ausgebildete Dichtungen 10 und 11 fluiddicht gegenüber der ersten Antriebswelle 3 abgedichtet.

Der radial äußere Ringkörper 5 ist im Querschnitt U-förmig ausgebildet und weist zwei über eine Basis 12 miteinander verbundene, beabstandet und konzentrisch zueinander angeordnete Schenkel 13 und 14 auf. Die Schenkel 13 und 14 weisen in Richtung des ersten Kreismessers 2. In dem radial inneren Schenkel 14 ist ein radialer Abschnitt 15 des Fluidkanals 8 angeordnet.

Der an der ersten Antriebswelle 3 ausgebildete Abschnitt der Fluidleitung 8 ist durch eine in der ersten Antriebswelle 3 ausgebildete axiale Bohrung 16 und eine in der ersten Antriebswelle 3 ausgebildete, die axiale Bohrung 16 im Bereich eines Sitzes für den Niederhaltering 4 mit einer ringförmig an der Außenseite der ersten Antriebswelle 3 ausgebildeten Vertiefung 17 fluidleitend verbindende radiale Bohrung 18 ausgebildet.

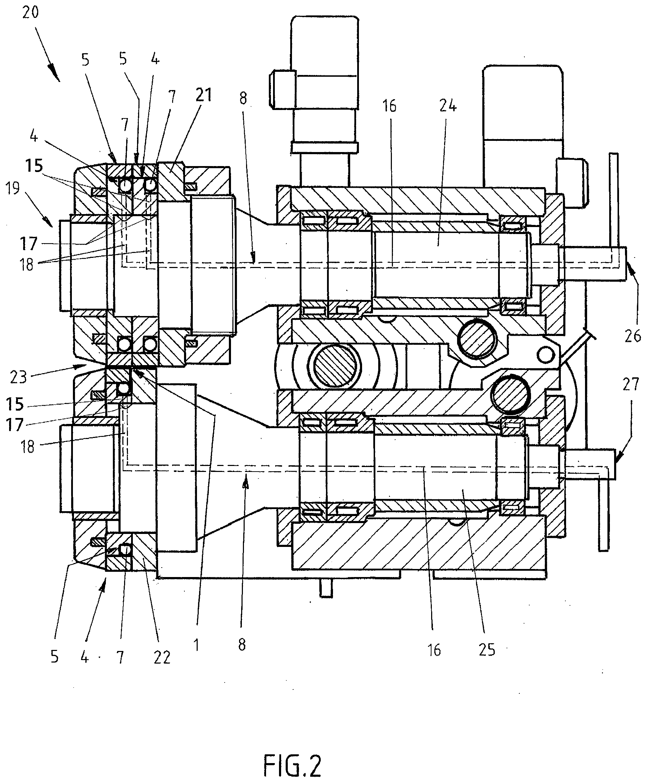

Figur 2 zeigt eine schematische Darstellung eines Längsschnitts durch ein Ausführungsbeispiel für eine erfindungsgemäße Besäumungsvorrichtung 19 einer Besäumungsanlage 20 zum Besäumen von Blechen und/oder Bändern aus Metall. Die Besäumungsvorrichtung 19 weist eine aus zwei schnitterzeugend zusammenwirkenden Kreismessern 21 und 22 gebildete Besäumungsschere 23 und zwei Antriebswellen 24 und 25 auf, wobei an jeder Antriebswelle 24 bzw. 25 ein Kreismesser 21 bzw. 22 angeordnet ist. Die Besäumungsvorrichtung 19 weist eine Niederhalteeinrichtung 1 auf, die vorzugsweise gemäß Figur 1 ausgebildet ist, wobei an der Antriebswelle 24 zwei entsprechende Niederhalteringe 4 angeordnet sind und an der Antriebswelle 25 ein Niederhaltering 4 angeordnet ist.

Die nicht mit den radialen Bohrungen 18 verbundenen Enden der axialen Bohrungen 16 sind jeweils fluidleitend mit einer an der jeweiligen Antriebswelle 24 bzw. 25 angeordneten Drehzuführung 26 bzw. 27 verbunden, die einen Abschnitt des jeweiligen Fluidkanals 8 ausbilden und an welche eine nicht gezeigte, zum Erzeugen von Druckluft eingerichtete Druckerzeugungseinrichtung der Besäumungsanlage 20 anschließbar ist.

### Bezugszeichenliste

- 1: Niederhalteeinrichtung
- 2: Kreismesser
- 3: Antriebswelle
- 4: Niederhaltering
- 5: radial äußerer Ringkörper
- 6: radial innerer Ringkörper
- 7: Fluidkammer
- 8: Fluidkanal
- 9: Abschnitt
- 10: Dichtung
- 11: Dichtung
- 12: Basis
- 13: Schenkel
- 14: Schenkel
- 15: Abschnitt
- 16: axiale Bohrung
- 17: Vertiefung
- 18: radiale Bohrung
- 19: Besäumungsvorrichtung
- 20: Besäumungsanlage
- 21: Kreismesser
- 22: Kreismesser
- 23: Besäumungsschere
- 24: Antriebswelle
- 25: Antriebswelle
- 26: Drehzuführung
- 27: Drehzuführung

## Patentansprüche

1. Niederhalteeinrichtung (1) für eine Besäumungsvorrichtung (19) zum Besäumen von Blechen und/oder Bändern aus Metall, aufweisend wenigstens einen an einer zum Antreiben eines ersten Kreismessers (2, 21, 22) vorgesehenen ersten Antriebswelle (3, 24, 25) anordbaren ersten Niederhaltering (4) und wenigstens einen an einer zum Antreiben eines mit dem ersten Kreismesser (2, 21, 22) schnitterzeugend zusammenwirkenden zweiten Kreismessers (2, 21, 22) vorgesehenen zweiten Antriebswelle (3, 24, 25) anordbaren zweiten Niederhaltering (4), **dadurch gekennzeichnet, dass** wenigstens ein Niederhaltering (4) einen radial äußeren, benachbart zu dem jeweiligen Kreismesser (2, 21, 22) anordbaren, zumindest teilweise aus Kunststoff gebildeten Ringkörper (5) aufweist, in dem eine ringförmig ausgebildete Fluidkammer (7) mit zumindest teilweise flexibel ausgebildeter Wandung angeordnet ist, wobei wenigstens ein an der jeweiligen Antriebswelle (3, 24, 25) und dem Niederhaltering (4) ausgebildeter Fluidkanal (8) vorhanden ist, über den die Fluidkammer (7) fluidleitend mit einer Druckerzeugungseinrichtung verbindbar ist.

2. Niederhalteeinrichtung (1) gemäß Anspruch 1, **dadurch gekennzeichnet, dass** der radial äußere Ringkörper (5) im Querschnitt U-förmig ausgebildet ist und zwei über eine Basis (12) miteinander verbundene, beabstandet und konzentrisch zueinander angeordnete Schenkel (13, 14) aufweist, wobei die Schenkel (13, 14) bei an der jeweiligen Antriebswelle (3, 24, 25) angeordnetem Niederhalterring (4) in Richtung des jeweiligen Kreismessers (2, 21, 22) weisen, und wobei in dem radial inneren Schenkel (14) ein radialer Abschnitt (15) des Fluidkanals (8) angeordnet ist.

3. Niederhalteeinrichtung (1) gemäß Anspruch 1 oder 2, **dadurch gekennzeichnet, dass** der an der jeweiligen Antriebswelle (3, 24, 25) ausgebildete Abschnitt der Fluidleitung (8) durch wenigstens eine in der Antriebswelle (3, 24, 25) ausgebildete axiale Bohrung (16) und wenigstens eine in der Antriebswelle (3, 24, 25) ausgebildete, die axiale Bohrung (16) im Bereich eines Sitzes für den Niederhaltering (4) mit einer ringförmig an der Außenseite der Antriebswelle (3, 24, 25) ausgebildeten Vertiefung (17) fluidleitend verbindende radiale Bohrung (18) ausgebildet ist, wobei das nicht mit der radialen Bohrung (18) verbundene Ende der axialen Bohrung (16) fluidleitend mit einer an der jeweiligen Antriebswelle (3, 24, 25) angeordneten Drehzuführung verbunden ist, die einen Abschnitt des Fluidkanals (8) ausbildet und an welche die Druckerzeugungseinrichtung anschließbar ist.

4. Niederhalteeinrichtung (1) gemäß einem der Ansprüche 1 bis 3, **dadurch gekennzeichnet, dass** der den radial äußeren Ringkörper (5) aufweisende Niederhaltering (4) wenigstens einen radial inneren Ringkörper (6) aufweist, in dem ein radialer Abschnitt (9) des Fluidkanals (8) angeordnet ist.

5. Niederhalteeinrichtung (1) gemäß Anspruch 4, **dadurch gekennzeichnet, dass** der radial innere Ringkörper (6) zumindest teilweise aus Metall, vorzugsweise Stahl, gebildet ist.

6. Niederhalteeinrichtung (1) gemäß Anspruch 4 oder 5, **dadurch gekennzeichnet, dass** der radial innere Ringkörper (6) über wenigstens zwei ringförmig ausgebildete Dichtungen (10, 11) fluiddicht gegenüber der jeweiligen Antriebswelle (3, 24, 25) abgedichtet ist.

7. Niederhalteeinrichtung (1) gemäß einem der Ansprüche 1 bis 6, **dadurch gekennzeichnet, dass** der radial äußere Ringkörper (5) zumindest teilweise aus einem Polyurethan gebildet ist.

8. Besäumungsvorrichtung (19) zum Besäumen von Blechen und/oder Bändern aus Metall, aufweisend wenigstens eine aus zwei schnitterzeugend zusammenwirkenden Kreismessern (2, 21, 22) gebildete Besäumungsschere (23) und wenigstens zwei Antriebswellen (3, 24, 25), wobei an jeder Antriebswelle (3, 24, 25) ein Kreismesser (2, 21, 22) angeordnet ist, **gekennzeichnet durch** wenigstens eine Niederhalteeinrichtung (1) gemäß einem der Ansprüche 1 bis 7.

9. Besäumungsanlage (20) mit wenigstens einer Besäumungsvorrichtung (19) zum Besäumen von Blechen und/oder Bändern aus Metall gemäß Anspruch 8.

10. Besäumungsanlage (20) gemäß Anspruch 9, **gekennzeichnet durch** wenigstens eine Druckerzeugungseinrichtung, welche fluidleitend mit dem Fluidkanal (8) verbunden ist.

11. Besäumungsanlage (20) gemäß Anspruch 9, **dadurch gekennzeichnet, dass** die Druckerzeugungseinrichtung zum Erzeugen von Druckluft eingerichtet ist.

12. Verfahren zum Niederhalten von Blechen und/oder Bändern aus Metall während deren Besäumung mittels einer Besäumungsvorrichtung (19), die wenigstens zwei ein zu besäumendes Blech bzw. Band zwischen sich einspannende, an Antriebswellen (3, 24, 25) für Kreismesser (2, 21, 22) der Besäumungsvorrichtung (19) angeordnete Niederhalteringe (4) aufweist, **dadurch gekennzeichnet, dass** die radiale Dicke von wenigstens einem Niederhaltering (4) in Abhängigkeit der jeweiligen Blechdicke bzw. Banddicke aktiv variiert wird.

## Claims

1. Holding-down device (1) for a trimming machine (19) for trimming sheets and/or strips of metal, comprising at least one first holding-down ring (4), which can be arranged at a first drive shaft (3, 24, 25) provided for driving a first circular knife (2, 21, 22), and at least one second holding-down ring (4), which can be arranged at a second drive shaft (3, 24, 25) provided for driving a second circular knife (2, 21, 22) co-operating with the first circular knife (2, 21, 22) for cut generation, **characterised in that** at least one holding-down ring (4) comprises a radially outer annular body (5) formed at least partly from plastics material, which can be arranged adjacent to the respective circular knife (2, 21) and in which a fluid chamber (7) of annular construction with walling at least partly of flexible construction is arranged, wherein at least one fluid channel (8), which is formed at the respective drive shaft (3, 24, 25) and the holding-down ring (4) and by way of which the fluid chamber (7) can be placed in fluid-conducting connection with a pressure generating device, is present.

2. Holding-down device (1) according to claim 1, **characterised in that** the radially outer annular body (5) is constructed to be of U-shaped cross-section and has two limbs (13, 14) connected together by way of a base (12) and arranged at a spacing from and concentrically with one another, wherein the limbs (13, 14) face in the direction of the respective circular knife (2, 21, 22) when the holding-down ring (4) is arranged at the respective drive shaft (3, 24, 25) and wherein a radial section (15) of the fluid channel (8) is arranged in the radially inner limb (14).

3. Holding-down device (1) according to claim 1 or 2, **characterised in that** the section of the fluid duct (8) formed in the respective drive shaft (3, 24, 25) is formed by at least one axial bore (16) formed at the drive shaft (3, 24, 25) and by at least one radial bore (18), which is formed in the drive shaft (3, 24, 25) and which places the axial bore (16) in the region of a seat for the holding-down ring (4) in fluid-conducting connection with an annular depression (17) formed at the outer side of the drive shaft (3, 24, 25), wherein the end of the axial bore (16) not connected with the radial bore (18) is in fluid-conducting connection with a rotary feed, which is arranged at the respective drive shaft (3, 24, 25) and forms a section of the fluid channel (8) and with which the pressure generating device is connectible.

4. Holding-down device (1) according to any one of claims 1 to 3, **characterised in that** the holding-down ring (4) having the radially outer annular body (5) comprises at least one radially inner annular body (6) in which a radial section (9) of the fluid channel (8) is arranged.

5. Holding-down device (1) according to claim 4, **characterised in that** the radially inner annular body (6) is formed at least partly of metal, preferably steel.

6. Holding-down device (1) according to claim 4 or 5, **characterised in that** the radially inner annular body (6) is fluid-tightly sealed relative to the respective drive shaft (3, 24, 25) by way of at least two seals (10, 11) of annular construction.

7. Holding-down device (1) according to any one of claims 1 to 6, **characterised in that** the radially outer annular body (5) is formed at least partly from a polyurethane.

8. Trimming machine (19) for trimming sheets and/or strips of metal, comprising at least one trimming shears (23) formed from two circular knives (2, 21, 22) co-operating for cut generation, and at least two drive shafts (3, 24, 25), wherein a circular knife (2, 21, 22) is arranged at each drive shaft (3, 24, 25), **characterised by** at least one holding-down device (1) according to any one of claims 1 to 7.

9. Trimming installation (20) with at least one trimming machine (19) for trimming sheets and/or strips of metal according to claim 8.

10. Trimming installation (20) according to claim 9, **characterised by** at least one pressure generating device in fluid-conducting connection with the fluid channel (8).

11. Trimming installation (20) according to claim 9, **characterised in that** the pressure generating device is equipped for generating compressed air.

12. Method of holding down sheets and/or strips of metal during trimming thereof by means of a trimming machine (19), which comprises at least two holding-down rings (4) clamping therebetween a sheet or plate to be trimmed and arranged at drive shafts (3, 24, 25) for circular knives (2, 21, 22) of the trimming device (19), **characterised in that** the radial thickness of at least one holding-down ring (4) is actively varied in dependence on the respective sheet thickness or strip thickness.

## Revendications

1. Mécanisme de retenue (1) pour un dispositif de cisaillage (19) pour le cisaillement de tôles et/ou de bandes en métal, présentant au moins un premier anneau de retenue (4) qui peut venir se disposer contre un premier arbre de commande (3, 24, 25) prévu pour l'entraînement d'une première lame circulaire (2, 21, 22) et au moins un deuxième anneau de retenue (4) qui peut venir se disposer contre un deuxième arbre de commande (3, 24, 25) prévu pour l'entraînement d'une deuxième lame circulaire (2, 21, 22) coopérant de manière à générer une coupe avec la première lame circulaire (2, 21, 22), **caractérisé en ce qu'**au moins un anneau de retenue (4) présente un corps annulaire (5) externe en direction radiale, qui peut venir se disposer en position adjacente à la lame circulaire respective (2, 21, 22), réalisé au moins en partie en une matière synthétique, dans lequel est disposée une chambre pour fluide (7) réalisée sous forme annulaire comprenant une paroi réalisée au moins en partie de manière flexible, dans lequel est présent au moins un canal pour fluide (8) réalisé contre l'arbre de commande respectif (3, 24, 25) et l'anneau de retenue (4), par lequel la chambre pour fluide (7) peut être reliée de manière à guider un fluide, à un mécanisme de génération de pression.

2. Mécanisme de retenue (1) selon la revendication 1, **caractérisé en ce que** le corps annulaire (5) externe en direction radiale est réalisé en forme de U en section transversale et présente deux branches (13, 14) reliées l'une à l'autre via une base (12), écartées l'une de l'autre et disposées en position concentrique l'une par rapport à l'autre, dans lequel les branches (13, 14), en ce qui concerne l'anneau de retenue (4) disposé contre l'arbre de commande respectif (3, 24, 25), sont orientées dans la direction de la lame circulaire respective (2, 21, 22), et dans lequel, dans la branche (14) interne en direction radiale, est disposé un tronçon radial (15) du canal pour fluide (8).

3. Mécanisme de retenue (1) selon la revendication 1 ou 2, **caractérisé en ce que** le tronçon du conduit pour fluide (8), réalisé contre l'arbre de commande respectif (3, 24, 25), est réalisé via au moins un alésage axial (16) réalisé dans l'arbre de commande (3, 24, 25) et au moins un alésage radial (18) reliant de manière à guider un fluide l'alésage axial (16) dans la zone d'un siège pour l'anneau de retenue (4) avec un renfoncement (17) réalisé sous forme annulaire sur le côté externe de l'arbre de commande (3, 24, 25), dans lequel l'extrémité de l'alésage axial (16), qui n'est pas reliée à l'alésage radial (18), est reliée de manière à guider un fluide à une alimentation rotative disposée contre l'arbre de commande respectif (3, 24, 25), qui réalise un tronçon du canal pour fluide (8) et auquel le mécanisme de génération de pression peut venir se raccorder.

4. Mécanisme de retenue (1) selon l'une quelconque des revendications 1 à 3, **caractérisé en ce que** l'anneau de retenue (4) présentant le corps annulaire (5) externe en direction radiale, présente au moins un corps annulaire (6) interne en direction radiale dans lequel est disposé un tronçon radial (9) du canal pour fluide (8).

5. Mécanisme de retenue (1) selon la revendication 4, **caractérisé en ce que** le corps annulaire (6) interne en direction radiale est formé au moins en partie en métal, de préférence en acier.

6. Mécanisme de retenue (1) selon la revendication 4 ou 5, **caractérisé en ce que** le corps annulaire (6) interne en direction radiale est fermé de manière étanche aux fluides, via au moins deux joints d'étanchéité (10, 11) réalisés sous forme annulaire, par rapport à l'arbre de commande respectif (3, 24, 25).

7. Mécanisme de retenue (1) selon l'une quelconque des revendications 1 à 6, **caractérisé en ce que** le corps annulaire (5) externe en direction radiale est formé au moins en partie à partir d'un polyuréthane.

8. Dispositif de cisaillage (19) pour le cisaillement de tôles et/ou de bandes en métal, présentant au moins une cisaille de rives (23) formée par deux lames circulaires (2, 21, 22) coopérant de manière à générer une coupe et au moins deux arbres de commande (3, 24, 25), dans lequel une lame circulaire (2, 21, 22) est disposée contre chaque arbre de commande (3, 24, 25), **caractérisé par** au moins un mécanisme de retenue (1) selon l'une quelconque des revendications 1 à 7.

9. Installation de cisaillage (20) comprenant au moins un dispositif de cisaillage (19) pour le cisaillement de tôles et/ou de bandes en métal selon la revendication 8.

10. Installation de cisaillage (20) selon la revendication 9, **caractérisée par** au moins un mécanisme de génération de pression qui est relié, de manière à guider un fluide, au canal pour fluide (8).

11. Installation de cisaillage. (20) selon la revendication 9, **caractérisée en ce que** le mécanisme de génération de pression est conçu pour générer de l'air comprimé.

12. Procédé pour la retenue de tôles et/ou de bandes en métal au cours de leur cisaillement au moyen d'un dispositif de cisaillage (19) qui présente au moins deux anneaux de retenue (4) enserrant entre eux une tôle, respectivement une bande à cisailler, disposés contre des arbres de commande (3, 24, 25) pour des lames circulaires (2, 21, 22) du dispositif de cisaillage (19), **caractérisé en ce que** l'épaisseur radiale d'au moins un anneau de retenue (4) varie de manière active en fonction de l'épaisseur de tôle, respectivement de l'épaisseur de bande respective.
